## Europäisches Patentamt

## European Patent Office

## Office européen des brevets

(11) Veröffentlichungsnummer: **0 230 522**
**B1**

# EUROPÄISCHE PATENTSCHRIFT

(45) Veröffentlichungstag der Patentschrift:
15.03.89

(51) Int. Cl.⁴: **F16H 57/08**

(21) Anmeldenummer: 86114480.6

(22) Anmeldetag: 18.10.86

(54) **Planetenradträger, insbesondere für Planetenräderwechselgetriebe in Kraftfahrzeugen.**

(30) Priorität: 03.12.85 DE 3542622

(43) Veröffentlichungstag der Anmeldung:
05.08.87 Patentblatt 87/32

(45) Bekanntmachung des Hinweises auf die Patenterteilung:
15.03.89 Patentblatt 89/11

(84) Benannte Vertragsstaaten:
DE FR GB IT NL SE

(56) Entgegenhaltungen:
DE-A- 2 124 009
DE-A- 2 503 518
DE-C- 1 176 949

(73) Patentinhaber: FORD-WERKE AKTIENGESELLSCHAFT,
Werk Köln-Niehl Henry-Ford-Strasse Postfach 60 40 02,
D-5000 Köln 60(DE)

(84) Benannte Vertragsstaaten: DE IT NL SE

(73) Patentinhaber: FORD MOTOR COMPANY LIMITED,
Eagle Way, Brentwood Essex CM13 3BW(GB)

(84) Benannte Vertragsstaaten: GB

(73) Patentinhaber: FORD FRANCE SOCIETE ANONYME,
344 Avenue Napoléon Bonaparte B.P. 307, F-92506 Rueil
Malmaison Cedex(FR)

(84) Benannte Vertragsstaaten: FR

(72) Erfinder: Premiski, Vladimir, Fliederstrasse 23,
D-5358 BAM-Willerscheid(DE)
Erfinder: Wehren, Wilhelm, Fichtenpfad 15,
D-5014 Kerpen(DE)
Erfinder: Graef, Kurt, Römerfeldstrasse 7,
D-5024 Pulheim(DE)
Erfinder: Biedermann, Sieghart,
Max-Liebermann-Strasse 45, D-5024 Pulheim(DE)

(74) Vertreter: Ritzkowsky, Harald, Dipl.-Ing., Ford-Werke
Aktiengesellschaft Patentabteilung NH/DRP
Henry-Ford-Strasse, D-5000 Köln 60(DE)

## Beschreibung

Die Erfindung bezieht sich auf eine Baureihe von Planetenradträgern, insbesondere für Planetenräderwechselgetriebe in Kraftfahrzeugen, der im Oberbegriff des Patentanspruches erläuterten Art.

Aus der DE-PS 1 176 949 ist es bekannt, die Planetenräder innerhalb eines Planetenrädergetriebes in ihrer Anzahl entsprechend dem zu übertragenden Drehmoment festzulegen und in ihrer Anordnung symmetrisch oder unsymmetrisch auszulegen.

Aus der DE-OS 2 503 518 ist ein Planetenradträger, insbesondere für Planetenräderwechselgetriebe in Kraftfahrzeugen bekannt, der aus zwei durch Schweißen verbundenen Trägerhälften, einer Korbhälfte und einer Flansch- oder Nabenhälfte besteht und der eine dem zu übertragenden Drehmoment entsprechende Anzahl von Planetenrädern aufnehmen kann.

Dieser bekannte Planetenradträger bildet den Gattungsbegriff der vorliegenden Erfindung, er weist jedoch den Nachteil auf, daß seine einzelnen Bauteile lediglich für eine bestimmte Anwendung zur Übertragung eines bestimmten Drehmomentes ausgelegt und verwendbar sind.

Innerhalb eines Planetenräderwechselgetriebes eines Kraftfahrzeuges sind jedoch eine Vielzahl von Planetenradsätzen erforderlich, die zur Herabsetzung der Herstellungskosten weitgehend baugleich, d.h. mit gleichen Zähnezahlen für die Sonnen-, Ring- und Planetenräder ausgeführt werden wobei nach den Anschlußbedingungen entsprechend verschieden geformte Planetenradträger erforderlich sind, deren zu übertragende Drehmomente unterschiedlich sind.

Ebenso kann auch ein bestimmter Planetenradsatz innerhalb eines Planetenräderwechselgetriebes eines Kraftfahrzeuges je nachdem mit dem Planetenräderwechselgetriebe zusammenarbeitenden Verbrennungsmotor mit erheblich unterschiedlichen zu übertragenden Drehmomenten beaufschlagt werden.

Bei einem in seinem Grundaufbau im wesentlichen unverändert bleibenden Planetenräderwechselgetriebe eines Kraftfahrzeuges wurde die erforderliche Anpassung der Drehmomentübertragungskapazität durch eine Verstärkung der entsprechenden Bauteile, d.h. der Planetenradsätze erreicht, indem z.B. anstelle eines Planetenradträgers mit drei Planetenrädern ein Planetenradträger mit sechs Planetenrädern eingesetzt wurde.

Die Aufgabe der Erfindung ist es, den baulichen Aufwand für die Anpassung eines Planetenräderwechselgetriebes in einem Kraftfahrzeg an unterschiedliche zu übertragende Drehmomente wesentlich zu vereinfachen und den für die verschiedenen Planetenradträger erforderlichen Fertigungs- und Materialaufwand wesentlich zu verringern.

Gemäß der Erfindung wird diese Aufgabe gelöst, indem eine Baureihe von Planetenradträgern mit den im Oberbegriff des Patentanspruches aufgezeigten grundsätzlichen Merkmalen geschaffen wird, die die im Kennzeichenteil des Patentanspruches aufgezeigten besonderen Merkmale aufweisen.

Dadurch, daß die Anzahl der Planetenräderaufnahmen an der Korbhälfte und entsprechend die Anzahl der Aufnahmebohrungen an der Flansch- oder Nabenhälfte dem maximal zu übertragenden Drehmoment entsprechen, die Flansch- oder Nabenhälfte als Sinterteil ausgebildet ist und der Planetenradträger bei der Montage nur mit der für ein bestimmtes Drehmoment erforderlichen Anzahl von 3, 4, 5 oder 6 Planetenrädern komplettiert wird, kann aus im wesentlichen gleichen Bauteilen eine Baureihe von Planetenradträgern geschaffen werden, die dem jeweils zu übertragenden Drehmoment einer bestimmten Leistungsklasse eines Kraftfahrzeuges voll entsprechen.

Die Erfindung wird anhand eines in der beiliegenden Zeichnung gezeigten Ausführungsbeispieles näher erläutert.

Es zeigt:

Fig. 1 eine Axialansicht auf die Korbhälfte eines Planetenradträgers;

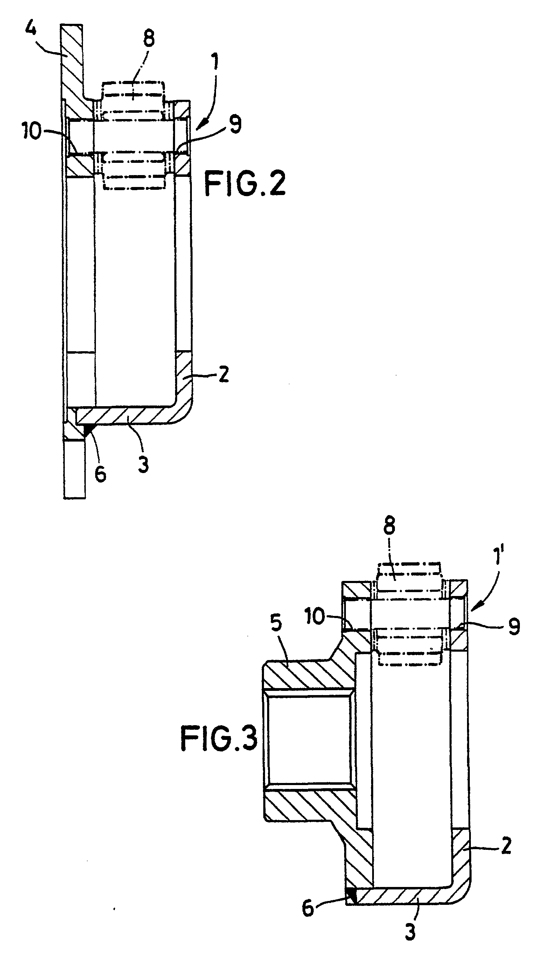

Fig. 2 einen vertikalen Schnitt entlang der Linie II-II in Fig. 1 und

Fig. 3 einen vertikalen Schnitt ähnlich Fig. 2 durch eine weitere Ausführung eines Planetenradträgers gemäß der Erfindung.

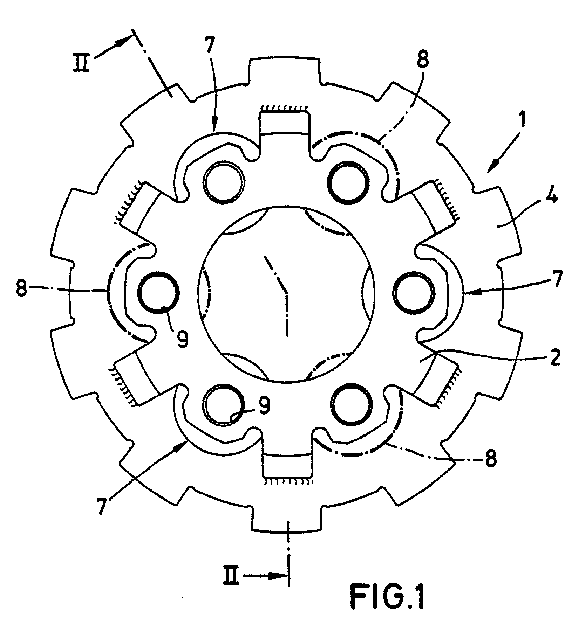

Ein Planetenradträger 1 bzw 1', insbesondere für ein Planetenräderwechselgetriebe in Kraftfahrzeugen mit einem bekannten Simpson-Satz, besteht aus einer spanlos erzeugten, als Blechpreßteil ausgebildeten Korbhälfte 2 mit Stegen 3, die mit einer gleichfalls spanlos erzeugten, als Sinterteil ausgebildeten zweiten Flansch- oder Nabenhälfte 4 (siehe Fig. 1) bzw. 5 (siehe Fig. 3) durch Kondensator-Entladungsschweißungen 6 verbunden ist.

Innerhalb des Planetenradträgers 1 ist in der Korbhälfte 2 eine auf die für das maximal zu übertragende Drehmoment ausgelegte Anzahl von Planetenräderaufnahmen 7 für Planetenräder 8 vorgesehen, d.h. es sind entsprechend viele Aufnahmebohrungen 9 für Planetenradbolzen, hier 6 Stück, in der Korbhälfte 2 vorgesehen und in der Flansch-oder Nabenhälfte 4 bzw. 5 sind ebensoviele Aufnahmebohrungen 10 für die Planetenradbolzen vorgesehen.

Da sich die Erfindung auf den Planetenradträger als Grundbauteil bezieht, ist er in der Zeichnung nicht fertig montiert und komplettiert dargestellt und es ist die Lage und Anordnung von möglichen Planetenrädern 8 nur in dicken Strich-Punkt-Linien angedeutet. Alle weiteren notwendigen Bauteile, wie Planetenradbolzen, Anlaufscheiben und Sicherungsringe wurden in den Zeichnungen gleichfalls nur in Strich-Punkt-Linien angedeutet und werden hier auch nicht näher erläutert.

Auf diese Weise kann mit einem einzigen Fein-Stanzteil der Korbhälfte durch Komplettierung mit entsprechenden Sinter-Flansch- oder Nabenhälften 4 bzw. 5 sowohl der vordere als auch der hintere Planetenradträger 1 bzw. 1' des Simpson-Satzes gebildet werden.

Die Bearbeitungsqualität der beiden Planetenradbauteile ist hierbei so gut und durch die besondere Form der Kondensator-Entladungsschweißung wird praktisch kein Schweißverzug bewirkt, so daß die Planetenradbolzen-Aufnahmebohrungen und die Anlaufflächen für die Planetenräder keinerlei Nachbearbeitung bedürfen.

Es wird darauf hingewiesen, daß sowohl der Planetenradträger 1 (Fig. 1) als auch der Planetenradträger 1' (Fig. 3) eine Korbhälfte mit einer für das maximal zu übertragende Drehmoment ausgelegten Anzahl von Planetenräderaufnahmen 7; hier für 6 Planetenräder 8 aufweisen, die jedoch während der Montage je nach Leistungsvariante des Planetenräderwechselgetriebes nur mit einer bestimmten Anzahl von entsprechenden Bauteilen ergänzt und komplettiert werden.

So kann z. B. für ein Planetenräderwechselgetriebe, das mit einem Verbrennungsmotor mit 3,8 l Hubraum zusammenarbeiten soll, die volle Anzahl von 6 Planetenrädern mit den entsprechenden Planetenradbolzen-Anlaufscheiben, Sicherungsringen und dergleichen montiert werden.

Für ein Planetenräderwechselgetriebe, das mit einem Verbrennungsmotor mit 2,8 l Hubraum zusammenarbeiten soll, wird hierbei nur eine Anzahl von 4 Planetenrädern montiert, und zwar in symmetrisch gleichmäßig verteilter Anordnung, die durch die symmetrische Sechserteilung für die Maximalauslegung gegeben ist.

Für ein Planetenräderwechselgetriebe, das mit einem Verbrennungsmotor von 1,8 l Hubraum zusammenarbeiten soll, werden z. B. nur drei Planetenräder in einer symmetrischen Anordnung montiert, wie es der Standardanordnung in Planetenradsätzen entspricht.

Entsprechende Lebensdauerversuche haben ergeben, daß auch durch eine ungleichmäßig verteilte Anordnung der Planetenräder, wie z. B. bei 5 Planetenrädern, was z. B. für einen Verbrennungsmotor mit 2,4 l Hubraum erforderlich sein könnte, keinerlei unerwünschte Verschleißerscheinungen befürchtet werden müssen.

### Patentanspruch

Baureihe von Planetenradträgern, insbesondere für Planetenräderwechselgetriebe in Kraftfahrzeugen, mit einer spanlos erzeugten, als Blechpreßteil ausgebildeten Korbhälfte mit Stegen, die mit einer gleichfalls spanlos erzeugten Flansch- oder Nabenhälfte durch Schweissen verbunden ist und wobei eine den zu übertragenden Drehmoment entsprechende Anzahl von Planetenrädern im Planetenradträger angeordnet ist, dadurch gekennzeichnet, daß die Anzahl der Planetenräderaufnahmen (7) an der Korbhälfte (2) und entsprechend die Anzahl der Aufnahmebohrungen (10) an der Flansch- oder Nabenhälfte (4 bzw. 5) dem maximal zu übertragenden Drehmoment entsprechen; die Flansch- oder Nabenhälfte (4 bzw. 5) als Sinterteil ausgebildet ist und der Planetenradträger (1 bzw. 1') bei der Montage nur mit der für ein bestimmtes Drehmoment erforderlichen Anzahl von 3, 4, 5 oder 6 Planetenrädern (8) komplettiert wird.

### Claim

A series of planetary gear carriers, in particular for planetary gear transmissions in motor vehicles, having a cage half which is produced without cutting and is formed as a pressed sheet metal part and has webs and which is joined by welding to a flange or hub half likewise produced without cutting, a number of planetary gears which corresponds to the torque to be transmitted being disposed in the planetary gear carrier, characterized in that, the number of planetary gear receiving means (7) on the cage half (2) and accordingly the number of receiving bores (10) on the flange or hub half (4 and 5 resp.) correspond to the maximum torque to be transmitted, the flange or hub half (4 and 5 resp.) is constructed as a sintered product and during assembly the planetary gear carrier (1 and 1' resp.) is completed only with the number of 3, 4, 5 and 6 planetary gears (8) required for a specific torque.

### Revendication

Gamme de porte-pignons satellites destinés notamment à des boîtes de vitesses à trains planétaires de véhicules automobiles, comportant une demi-corbeille avec entretoises, se présentant sous la forme d'une pièce en tôle obtenue à la presse sans enlèvement de copeaux, qui est assemblée par soudage à une moitié de bride ou de moyeu également produite sans enlèvement de copeaux, un nombre de pignons satellites correspondant au couple de rotation à transmettre étant disposé dans le porte-satellites, caractérisé en ce que le nombre des logements (7) des satellites ménagés dans la demi-corbeille (2) et de même le nombre des perçages de logement (10) pratiqués dans la moitié de bride ou la moitié de moyeu (respectivement 4 et 5), correspondent au couple de rotation maximal à transmettre, la moitié de bride ou de moyeu (respectivement 4 et 5) est une pièce frittée et le porte-satellites (1) ou (1') n'est complété lors du montage que par un nombre de 3, 4, 5 ou 6 pignons satellites (8) nécessaire à un couple de rotation défini.

FIG.1

FIG.2

FIG.3